# EUROPEAN PATENT APPLICATION

(11) **EP 4 660 108 A1**
(43) Date of publication of application: **10.12.2025**
(21) Application number: 25180564.4
(22) Date of filing: 03.06.2025
(51) Int. Cl.: B65G 47/51, B65G 60/00

(54) **METHOD FOR STORING SEMI-FINISHED ARTICLES IN TRAYS**

(30) Priority: 06.06.2024 IT 202400013069
(71) Applicant: R.A JONES & CO., Covington, KY 41017 (US)
(72) Inventor: GIGANTE, Antonio, 40133 BOLOGNA (IT)
(74) Representative: Tirloni, Bartolomeo

(57) **Abstract**

Method for storing semi-finished articles (A) comprising providing a tray (1) comprising a plurality of compartments (3), withdrawing a first batch of semi-finished articles (A) from a production path of finished articles in an intermediate stage of production process of finished articles, depositing the first batch of semi-finished articles (A) on the tray (1), the semi-finished articles (A) occupying at least part of a respective compartment (3), the semi-finished articles (A) of the first batch being aligned along a first direction (100) when housed in the respective compartment (3), subsequent storing the tray (1) in a storage bay, withdrawing a first set of semi-finished articles (A) from the respective compartment (3) while keeping the semi-finished articles (A) aligned along the first direction (100) and reintroducing the first set of semi-finished articles (A) into the production path, completing a production of finished articles starting from the semi-finished articles (A) reintroduced into the production path.

## Description

### Technical field of the invention

The present invention concerns a method for storing semi-finished articles.

### Technical state of the Art

In the context of industrial processes, such as in the packaging sector, for example of food products, it is known to realize articles by means of production processes, typically in continuous.

### Summary of the invention

With the term "article" it is generically intended any consumer article produced in an industrial context, preferably by means of a production process carried out on a continuous production line.

With the expression "semi-finished article" it is intended both an article in any intermediate phase of the respective production process, for example wherein the article has not yet been completed, and also the completed article at the discharge of the continuous production line.

With the expression "production path" it is intended the physical development of the continuous production line.

With the terms "perpendicular" and "orthogonal" it is respectively intended a substantial perpendicularity and a substantial orthogonality between two elements, comprising both the ideal case wherein such elements are arranged with respect to each other so as to form a right angle, and also more frequent cases wherein the two elements are arranged with respect to each other so as to form an angle deviating from the right angle (e.g. comprised within a range of ±15°, more preferably of ±10°, with respect to the right angle) but in any case in a negligible manner or not relevant for the functioning of the present solution.

Similarly, the term "parallel" and similar refer to a condition of pure parallelism or to a parallelism comprised within the range 0°±15°, more preferably 0°±10°.

In the aforementioned context, the Applicant has perceived the need to store, for a desired period of time, semi-finished articles taken from the respective continuous production line.

Such need can for example arise in case of unexpected occurrence of bottlenecks along the line, in order not to interrupt production completely at least regarding the part of the production process performed upstream of the bottleneck, or in case of warehouse needs, for example in order to realize substantially finished semi-finished articles, to be completed at a later time (for example on the occasion of a specific order by a customer). **In** such situation, the Applicant has faced the problem of reintroducing, when necessary, the semi-finished articles into the continuous production line of the articles in a simple and/or rapid and/or versatile and/or reliable manner.

According to the Applicant, the aforementioned problem is solved by a method for storing in accordance with the appended claims and/or comprising one or more of the following characteristics.

According to one aspect the invention relates to a method for storing semi-finished articles.

Preferably said method comprises providing a tray.

Preferably said tray comprises a first face.

Preferably said tray comprises a plurality of compartments realized in correspondence of said first face.

Preferably the method comprises obtaining semi-finished articles in an intermediate stage of a production process of finished articles along a production path of finished articles.

Preferably the method comprises withdrawing a first batch of said semi-finished articles from said production path of finished articles in correspondence of said intermediate stage.

Preferably the method comprises depositing said first batch of semi-finished articles on said tray.

Preferably said semi-finished articles of said first batch collectively occupying at least part of a respective compartment of said plurality of compartments.

Preferably said semi-finished articles of said first batch of semi-finished articles are aligned with each other along a first direction when housed in said respective compartment of said tray.

Preferably the method comprises, more preferably subsequent to said depositing of said first batch of semi-finished articles, storing said tray in a storage bay separate from said production path.

Preferably the method comprises, more preferably subsequent to said storing said tray in said storage bay, withdrawing at least a first set of semi-finished articles from said respective compartment of said tray while keeping said semi-finished articles of said first set aligned along said first direction.

Preferably the method comprises reintroducing said first set of semi-finished articles into said production path of said finished articles.

Preferably the method comprises completing a production of finished articles starting from said semi-finished articles of said first set reintroduced into said production path.

According to the Applicant, maintaining the semi-finished articles, when housed in respective compartment of the tray, aligned with each other along the first direction, allows storing the semi-finished articles in an orderly manner inside the tray, independently from the storage time.

In this way, the subsequent operation of withdrawing the first set of semi-finished articles from the respective compartment performed while keeping such semi-finished articles aligned with each other along the first direction is facilitated, and, in synergy with the latter, also the reintroduction of the first set of articles into the production path, since the articles are presented in an orderly arrangement to be disposed in relation to the advancement direction along the production path (e.g. advancement direction of the articles along the continuous production line).

In this way, the reintroduction into production of the semi-finished articles previously stored is performed in a rapid, simple, reliable, and versatile manner, also for first sets of numerically consistent semi-finished articles.

The storage bay external to the production path (that is not forming part of the production path) allows storing the tray containing the semi-finished articles wherever desired, both in proximity to, and at a considerable distance from, the production path, as a further advantage of the versatility of the reintroduction into production of the semi-finished articles.

With the expression "external to the production path" referring to the storage bay it is intended that the bay does not (necessarily) form part of the production path. The storage bay, therefore, is not necessarily crossed by a semi-finished article during a respective production process.

In other words, the semi-finished article can alternatively proceed along the production path -without passing through the storage bay- or, upon request, be taken from the line and stored, in a tray, in the storage bay for future reintroduction into the production path. The present invention in the aforementioned aspect can comprise one or more of the following preferred characteristics.

Preferably said tray has a rectangular plan.

Preferably said first direction is straight.

Preferably said first direction is parallel to an edge of said tray. **In** this way, the semi-finished articles are housed in a rational manner.

Preferably each compartment has a main development parallel to said first direction.

Preferably each compartment extends for substantially an entire length of said edge of the tray. **In** this way, the space is exploited in an efficient manner.

**In** one embodiment said withdrawing a first batch of semi-finished articles from said production path and said reintroducing said first set of semi-finished articles into said production path are performed on the same continuous production line of said finished articles that implements said production path.

**In** one embodiment said withdrawing a first batch of semi-finished articles from said production path and said reintroducing said first set of semi-finished articles into said production path are performed respectively on a first and a second distinct continuous production line of said finished articles.

Preferably each of said first and second continuous production lines implements a respective production path of finished articles.

In this way the method for storing is versatile, being adaptable to various industrial contexts.

Preferably said storage bay is external to each respective production path of said first and second continuous production line.

Preferably said method comprises, prior to said storing said tray in said storage bay, filling said plurality of compartments of said tray with semi-finished articles.

Preferably filling said plurality of compartments is performed by repeating, preferably in temporal sequence and for additional batches of semi-finished articles subsequent to said first batch of semi-finished articles, said withdrawing a first batch of semi-finished articles and said depositing said first batch of semi-finished articles onto said tray. In this way, the storage is efficient.

Preferably said method comprises providing a plurality of trays, including said tray. In this way, the storage capacity is encouraged.

Preferably each tray of said plurality of trays comprises a respective first face. Preferably each tray comprises a respective plurality of compartments formed in said respective first face. In this way, the trays are realized rationally.

Preferably each tray comprises a respective second face opposite to said first face.

In one embodiment said respective second face is counter-shaped to said first face.

Preferably said trays are all identical to each other. In this way, the trays are simple to realize. In this way, moreover, the empty trays are stackable in a compact manner (that is, with the second face of a tray housed at least partially in the compartments of the first face of another tray disposed directly below), to the advantage of reducing the bulk of the empty trays.

Preferably said withdrawing a first batch of semi-finished articles is performed for each tray of said plurality of trays.

Preferably said depositing said first batch of semi-finished articles onto said tray is performed for each tray of said plurality of trays.

Preferably said filling said plurality of compartments of said tray is performed for each tray of said plurality of trays.

Preferably said storing said tray in said storage bay is performed for each tray.

Preferably said storing said tray in said storage bay comprises vertically stacking said trays on top of each other in at least one stack of trays. In this way the storage space is managed in an efficient manner.

Preferably each tray is asymmetric with respect to a respective center plane orthogonal to said respective first face.

Preferably vertically stacking said trays comprises arranging directly consecutive trays in said at least one stack of trays rotated 180° with respect to a rotation axis lying in said respective center plane. In this way, the trays, when having the respective compartments housing the semi-finished articles, can be stacked maintaining space for the articles. In fact, thanks to the lack of symmetry of the trays with respect to the first plane, the directly consecutive trays, when rotated by 180°, occupy the same footprint but are not stackable in the aforementioned compact manner, thus leaving space for the semi-finished articles.

Preferably said arranging said directly consecutive trays in said at least one stack rotated 180° with respect to each other comprises rotating said at least one stack of trays by 180° around said rotation axis before placing a new tray on top of said at least one stack of trays. In this way, the process is simplified.

Preferably said first set of semi-finished articles comprises a number of semi-finished articles equal to the number of semi-finished articles included in said first batch of semi-finished articles. In this way, the simplicity and/or rapidity of picking and/or reintroduction of the semi-finished articles from and into the processing path is further improved.

Preferably said reintroducing said first set of semi-finished articles into said production path comprises disposing said first direction in a geometrical relation with a feed direction of semi-finished articles along said production path. In this way the reintroduction of the articles is further facilitated.

In one embodiment, said geometric relation is of parallelism.

In one embodiment, said geometric relation is of orthogonality.

It is specified that some steps of the above-described method can be independent from the reported order of execution, except where a sequentiality or contemporaneity between two or more steps is expressly indicated. Moreover, some steps can be optional. Moreover, some steps can be performed repetitively, or can be performed in series or in parallel with other steps of the method.

### Brief description of the figures

Figures 1-4 schematically show some phases of the method of storage according to the present invention;
Figure 5 shows an enlarged detail of figure 4;
Figures 6 and 7 schematically show respective embodiments of trays usable in the method according to the present invention.

### Detailed description of some embodiments of the invention

The characteristics and the advantages of the present invention will be further clarified by the following detailed description of some embodiments, presented by way of example and not limitation of the present invention, with reference to the accompanying figures.

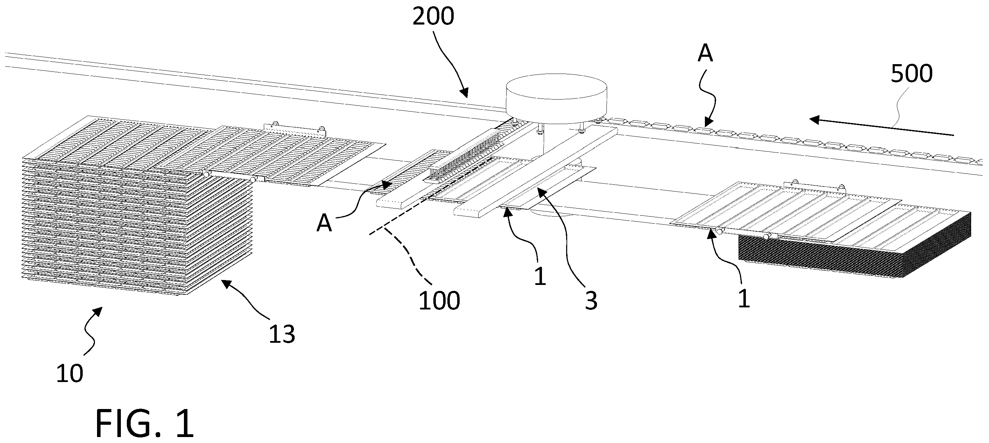

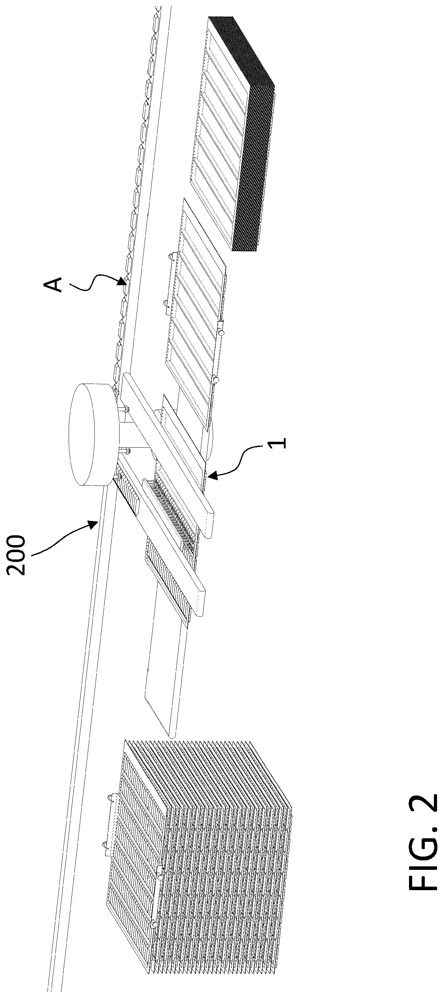

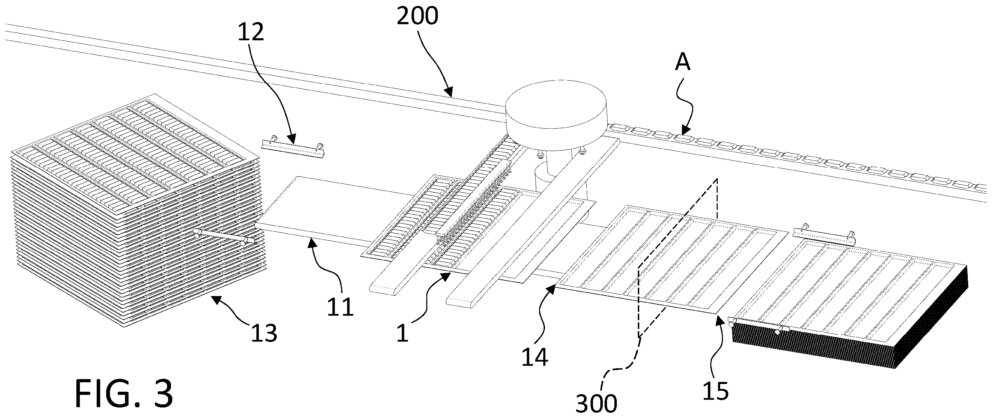

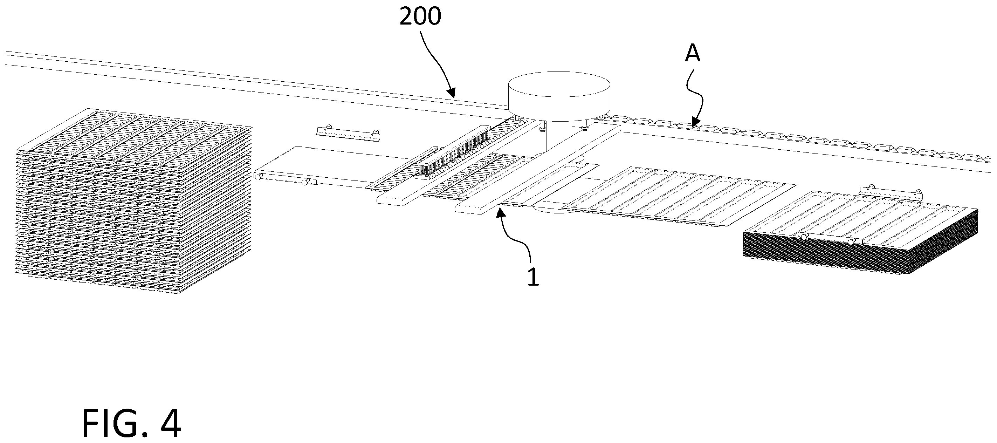

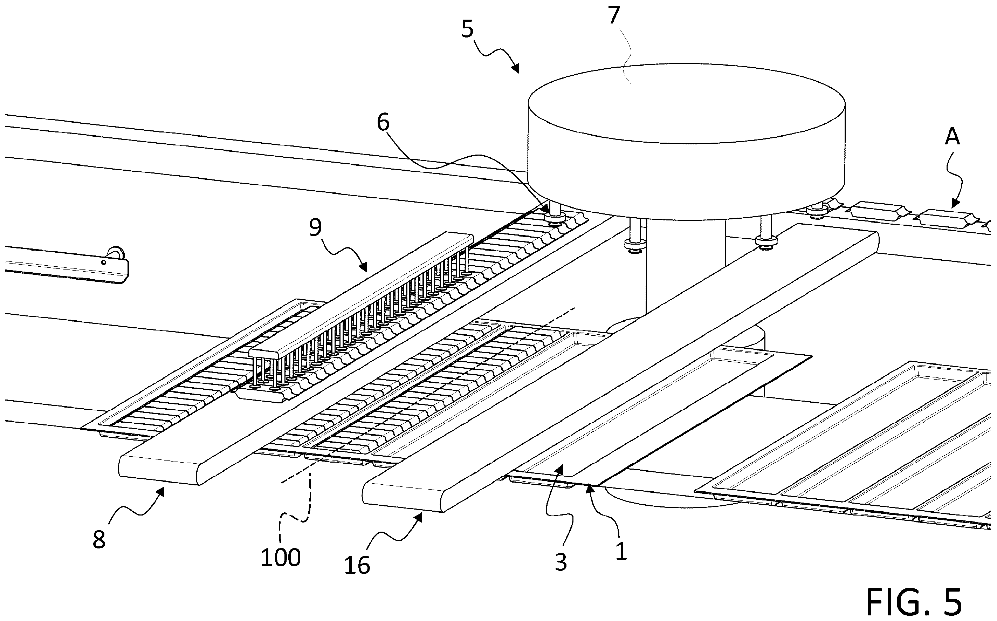

Figures 1-5 exemplarily depict some phases of an exemplary embodiment of a method for storing semi-finished articles A (depicted in a purely schematic manner as packages) according to the present invention.

For example, the semi-finished articles A can be wrapped food products, such as bars, at the end of the process of manufacturing the food and packaging of the single bar, but before a phase of boxing the bars in a common box (which contains more than one).

In the following description, reference will be made by way of example to the aforementioned case of semi-finished articles as packaged bars, without however losing generality.

For example, the storage of the semi-finished articles can be performed upon the occurrence of a bottleneck on a continuous production line of the finished articles, for example a slowdown or a failure of the packaging systems of the single packaged bars. In such circumstance, the method of storage according to the present invention, as for example described hereinafter, allows, when necessary, to store the single packaged bars in an orderly manner, simplifying and speeding up the operations of reintroduction into the continuous production line of the single packaged bars once the bottleneck is resolved.

Exemplarily the method comprises providing a tray 1. More in detail, the method exemplarily comprises providing a plurality of trays 1, all identical to each other. Exemplarily the trays 1 have a rectangular plan. Such plan shape is however not limiting and the trays in other embodiments can have any plan shape (e.g. square, triangular, circular, etc.).

Exemplarily each tray 1 comprises a first face 2 and a plurality of compartments 3 formed in correspondence of the first face 2.

Exemplarily each tray 1 comprises seven compartments 3, each having a respective main development direction arranged parallel to a same edge 14 of the tray 1, exemplarily the edge containing the short side of the rectangular plan of the tray 1. Exemplarily each compartment 3, along the respective main development direction, extends for substantially an entire length of said edge 14 of the tray 1.

In alternative embodiments, the trays can comprise compartments of any shape and/or size, for example adapted to the type of semi-finished article that the tray will contain, for example providing shorter compartments, and/or more or less deep, and/or with internal partitions, and/or with main development direction parallel to the long side of the tray, and/or developing in a manner not parallel to the edges of the tray, etc. Exemplarily, each tray 1 further comprises a respective second face 4, facing opposite to the respective first face 2.

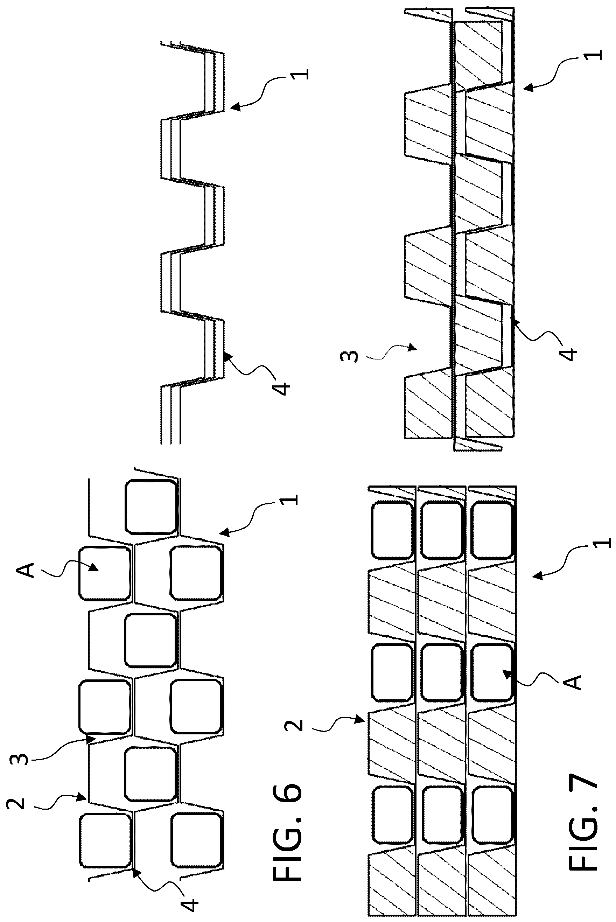

In the embodiment of figures 1-6, the respective second face 4 of each tray 1 is counter-shaped to the respective first face 2. More in detail, the second face 4 comprises ridges corresponding to the compartments of the tray 1, alternated by valleys, suitably sized to allow stacking the empty trays 1 in a compact manner, as for example shown in figure 6, on the right.

Exemplarily the empty trays 1 are arranged stacked in the aforementioned compact manner in a stacking bay, ready to be employed in the method of storage, as will be described hereinafter.

In one embodiment (figure 7), the second face 4 of each tray 1 is substantially flat (not counter-shaped to the first face 2). In such embodiment, the empty trays 1 can be stacked in a compact manner by placing one tray 1 upside down (i.e. with the compartments 3 facing downwards) after each tray 1 arranged with the respective compartments 3 facing upwards (or vice versa) so as to match respectively the protrusions of each tray 1 with the compartments 3 of the tray 1 facing it, as shown in figure 7, on the right.

Exemplarily the method comprises thus obtaining the semi-finished articles A in an intermediate phase of a production process of finished articles along a production path 200 of finished articles. The intermediate phase can represent any production phase of the finished articles in their production process. In a broad sense, the intermediate phase can also comprise a final phase of the production process wherein the finished articles have been obtained.

Exemplarily the method comprises withdrawing a first batch of semi-finished articles A from the production path 200 of the finished articles. Exemplarily (figures 1-5), the production path 200 is shown only partially and in a purely schematic manner by means of a flat surface on which the semi-finished articles A are made to transit. Exemplarily the semi-finished articles A are withdrawn from the production path 200 one by one by means of a first lifting device 5 having a plurality of gripping arms 6 (shown only schematically) installed on a common rotating support 7.

Exemplarily the semi-finished articles A are arranged on a conveyor belt section 8 by the first lifting device 5. From the conveyor belt section 8, the semi-finished articles A are again withdrawn by a second lifting device 9 which simultaneously lifts a plurality of semi-finished articles A maintaining them orderly aligned with each other. Exemplarily, such plurality of semi-finished articles A constitutes the aforementioned first batch.

Exemplarily the method comprises depositing the first batch of semi-finished articles A on the tray 1, the semi-finished articles A of the first batch occupying overall at least part of a respective compartment 3 of the plurality of compartments 3.

More in detail, the second lifting device 9 and each compartment 3 of each tray 1 are suitably sized in an interdependent manner, so that the second lifting device 9 simultaneously lifts an exact number of semi-finished articles A (the first batch) such that the first batch fully occupies a given compartment 3. In other words, the first batch of articles is sized so as to fully occupy one compartment 3 with a single depositing operation.

Alternatively (not shown), it can be provided to deposit more than one batch of semi-finished articles for each compartment of each tray, in order to fill the same compartment of the tray.

In one embodiment (not shown), the first batch of semi-finished articles can be withdrawn in a single solution directly from the production path 200 by means of the sole second lifting device 9.

Exemplarily the semi-finished articles A of the first batch of semi-finished articles A are all aligned with each other along a first direction 100 when occupying the respective compartment 3 of the tray 1 (that is for the entire duration of their stay in the compartment).

Exemplarily the first direction 100 is straight and parallel to the edge 14 of the tray.

Exemplarily the method comprises, subsequent to depositing the first batch of semi-finished articles A in the compartment, storing the tray in a storage bay 10 external to (that is not forming part of) the production path 200. In other words, with the storage bay 10 external to the production path, the semi-finished article A (as shown in figures 1-5) can alternatively proceed along the production path 200 (without ever passing through the storage bay 10) or, upon request (for example upon the occurrence of the aforementioned bottleneck), be taken from the production path and stored, in a tray, in the storage bay 10 for subsequent reintroduction into the production path 200.

More in detail, exemplarily the method comprises, prior to storing the tray 1 in the storage bay 10, filling the plurality of compartments 3 of the tray 1 with semi-finished articles A by repeating, for further batches of semi-finished articles A subsequent to the first batch, the actions of picking the batch of semi-finished articles A and depositing the batch of semi-finished articles A on the tray 1, exemplarily in a respective empty compartment 3. Once full, the tray 1 is exemplarily sent to the storage bay 10.

Exemplarily the full tray 1 is initially moved by means of a conveyor belt section 11 and subsequently picked from the conveyor belt 11 by means of a pair of brackets 12 which contact the tray 1 at opposite edges of the tray 1.

Exemplarily the tray is thus deposited in storage bay 10.

Exemplarily the storage bay 10 is located in proximity to the production path 200. Alternatively (not shown), the storage bay 10 can be located at a distance from the production path 200.

The operation of filling the tray and storing the full tray in storage bay 10 is exemplarily repeated for each tray 1 of the plurality of trays.

Exemplarily storing the tray 1 in the storage bay 10 comprises stacking the full trays vertically in at least one stack 13 of trays 1.

Advantageously, in the embodiment shown in figures 1-5, each tray 1 is asymmetric with respect to a respective first center plane 300 orthogonal to the respective first face 2.

More in detail, as shown in the figures, the lack of symmetry with respect to the first center plane 300 is exemplarily realized by arranging the compartments 3 of each tray in a non-symmetrical manner with respect to the first center plane. Exemplarily in fact, the compartments 3 are made in a position more proximal to the edge 14 of the tray 1 compared to the opposite edge 15.

In the embodiment shown, vertically stacking the trays 1 comprises thus exemplarily arranging directly consecutive trays 1 of the at least one stack 13 of trays 1 rotated by 180° with respect to a rotation axis (not shown) lying in the respective first center plane 300.

Exemplarily arranging the directly consecutive trays 1 rotated by 180° is realized by rotating the stack 13 of trays before placing the subsequent full tray 1 on top of it.

Such rotation allows misaligning the trays obtaining a stacked configuration substantially as shown in figure 6, on the left, thus leaving space for the semi-finished articles A in order not to damage them by crushing.

Exemplarily the method thus comprises, subsequent to storing the tray 1 in the storage bay 10, withdrawing at least a first set of semi-finished articles A from the respective compartment 3 of the tray while maintaining the semi-finished articles A of the first set aligned with each other along the first direction 100.

Optionally each tray 1, prior to withdrawing the semi-finished articles A, is retrieved from the storage bay 10 and placed in proximity to the production path of destination of the semi-finished articles A, as described hereinafter.

Exemplarily the first set of semi-finished articles A contains a number of semi-finished articles A equal to those contained in the first batch (or each further batch), and the picking of the first set of semi-finished articles A from the tray 1 is exemplarily performed by the second lifting device 9 which maintains (not shown) the semi-finished articles A aligned along the first direction 100 during the picking.

Exemplarily the method comprises reintroducing the first set of semi-finished articles A into the production path 200 of the finished articles.

In detail, the semi-finished articles A of the first set are exemplarily reintroduced into the production path 200 by means of combined and sequential action of the second lifting device 9 which places the set of semi-finished articles A on a further conveyor belt section 16 and, then, of the first lifting device 5 which picks the semi-finished articles A from the further conveyor belt section 16 and repositions them in the production path 200.

In one embodiment (not shown), the semi-finished articles of the first set can be reintroduced directly into the production path 200 by means of the sole second lifting device 9 in a single operation.

Exemplarily reintroducing the first set of semi-finished articles A into the production path 200 comprises disposing the first direction 100 in geometric relation with an advancement direction 500 of semi-finished articles A along the production path 200. Exemplarily, the geometric relation is of orthogonality and is realized when the semi-finished articles A of the first set are arranged on the further conveyor belt section 16.

In other embodiments (not shown), for example when the first set of semi-finished articles is reintroduced directly into the production path 200, the geometric relation can alternatively be of orthogonality or parallelism, depending on how the production path provides for the advancement of the semi-finished articles, for example if it provides for advancement only in a single row, or in rows and columns.

Exemplarily withdrawing the first batch of semi-finished articles A from the production path 200 and reintroducing the first set of semi-finished articles A into the production path 200 are performed on the same continuous production line of finished articles that realizes the production path 200.

In an alternative embodiment (not shown), withdrawing the first batch of semi-finished articles A from the production path and reintroducing the first set of semi-finished articles A into the production path can be performed respectively on a first and a second continuous production line of finished articles distinct from each other, each realizing a respective production path of finished articles.

In such embodiment, the storage bay 10 is preferably external to each respective production path of the first and second continuous production line.

Exemplarily the method thus comprises completing a production of finished articles starting from the semi-finished articles A of the first set of semi-finished articles A reintroduced into the production path 200. For example, the production of the articles can be completed by means of the same continuous production line from which the semi-finished articles A had been withdrawn, or by means of a different continuous production line, similar to the continuous production line from which the semi-finished articles A had been withdrawn regarding phases and machines, or even different (e.g. provided that the starting semi-finished article is common to both).

## Claims

1. Method for storing semi-finished articles (A), said method comprising the steps of:
- providing a tray (1) comprising a first face (2) and a plurality of compartments (3) realized in correspondence of said first face (2);
- obtaining semi-finished articles (A) in an intermediate stage of a production process of finished articles along a production path (200) of finished articles;
- withdrawing a first batch of said semi-finished articles (A) from said production path (200) of finished articles in correspondence of said intermediate stage;
- depositing said first batch of semi-finished articles (A) on said tray (1), said semi-finished articles (A) of said first batch collectively occupying at least part of a respective compartment (3) of said plurality of compartments (3), wherein said semi-finished articles (A) of said first batch of semi-finished articles (A) are aligned with each other along a first direction (100) when housed in said respective compartment (3) of said tray (1);
- subsequent to said depositing of said first batch of semi-finished articles (A), storing said tray (1) in a storage bay (10) separate from said production path (200);
- subsequent to said storing of said tray (1) in said storage bay (10), withdrawing at least a first set of semi-finished articles (A) from said respective compartment (3) of said tray (1) while keeping said semi-finished articles (A) of said first set aligned along said first direction (100) and reintroducing said first set of semi-finished articles (A) into said production path (200) of said finished articles;
- completing a production of finished articles starting from said semi-finished articles (A) of said first set reintroduced into said production path (200) of said finished articles.

2. Method according to claim 1, wherein said withdrawing a first batch of semi-finished articles (A) from said production path (200) and said reintroducing said first set of semi-finished articles (A) into said production path (200) are performed on the same continuous production line of said finished articles that implements said production path (200).

3. Method according to claim 1, wherein said withdrawing a first batch of semi-finished articles (A) from said production path (200) and said reintroducing said first set of semi-finished articles (A) into said production path (200) are performed respectively on a first and a second distinct continuous production line of said finished articles, each of said first and second continuous production lines implementing a respective production path of finished articles.

4. Method according to any one of the preceding claims, comprising, prior to said storing said tray (1) in said storage bay (10), filling said plurality of compartments (3) of said tray (1) with semi-finished articles (A) by repeating, in temporal sequence and for additional batches of semi-finished articles (A) subsequent to said first batch of semi-finished articles (A), said withdrawing a first batch of semi-finished articles (A) and said depositing said first batch of semi-finished articles (A) onto said tray (1).

5. Method according to claim 4, comprising providing a plurality of trays (1), including said tray (1), each tray (1) of said plurality of trays (1) comprising a respective first face (2) and a respective plurality of compartments (3) formed in said respective first face (2), wherein said withdrawing a first batch of semi-finished articles (A), said depositing said first batch of semi-finished articles (A) onto said tray (1), and said filling said plurality of compartments (3) of said tray (1) are performed for each tray (1) of said plurality of trays (1), and wherein said storing said tray (1) in said storage bay (10) is performed for each tray (1) and comprises vertically stacking said trays (1) on top of each other in at least one stack (13) of trays (1).

6. Method according to claim 5, wherein each tray (1) is asymmetric with respect to a respective center plane (300) orthogonal to said respective first face (2), and wherein vertically stacking said trays (1) comprises arranging directly consecutive trays (1) in said at least one stack (13) of trays (1) rotated 180° with respect to a rotation axis lying in said respective center plane (300).

7. Method according to claim 6, wherein said arranging said directly consecutive trays (1) in said at least one stack (13) rotated 180° with respect to each other comprises rotating said at least one stack (13) of trays by 180° around said rotation axis before placing a new tray (1) on top of said at least one stack (13) of trays.

8. Method according to any one of the preceding claims, wherein said reintroducing said first set of semi-finished articles (A) into said production path (200) comprises disposing said first direction (100) in a geometrical relation with a feed direction (500) of semi-finished articles (A) along said production path (200).

9. Method according to any one of the preceding claims, wherein said first set of semi-finished articles (A) comprises a number of semi-finished articles (A) equal to the number of semi-finished articles (A) included in said first batch of semi-finished articles (A).

10. Method according to any one of the preceding claims, wherein each tray (1) comprises a respective second face (4) opposite to said first face (2), and wherein said respective second face (4) is counter-shaped to said first face (2).
